# EUROPEAN PATENT SPECIFICATION

(11) **EP 1 679 476 B1**
(45) Date of publication and mention of the grant of the patent: **02.04.2008**
(21) Application number: 05028407.4
(22) Date of filing: 23.12.2005
(51) Int. Cl.: F24F 3/14, F24F 13/22, F24F 6/18, F25B 13/00

(54) **Multi-unit air conditioning system with humidifying function**
Klimaanlage mit mehreren Einheiten mit Luftbefeuchtung
Système de climatisation à plusieurs unités avec la fonction d'humidification

(30) Priority: 28.12.2004 KR 2004113569
(43) Date of publication of application: 12.07.2006
(73) Proprietor: LG ELECTRONICS INC., Seoul 150-010 (KR)
(72) Inventor: Park, Young Min, Yeonsu-ku Inchun-si 406-110 (KR); Kim, Ki Bum, Kangnam-ku Seoul 135-092 (KR); Choi, Jin Ha, Manan-ku Anyang-si Kyungki-do 430-041 (KR); Kang, Jae Sik, Guro-ku Seoul 159-050 (KR); Chung, Baik Young, Kyeyang-ku Inchun-si 407-710 (KR)
(74) Representative: Vossius & Partner

(56) References cited:
- EP-A- 0 268 776
- EP-A- 1 116 922
- EP-A- 1 394 483
- GB-A- 1 591 713

## Description

The present invention relates to a cooling/heating air conditioner, and, more particularly, to a cooling/heating air conditioner with a humidifying function, which is capable of supplying humidifying air into a region to be heated, by use of condensed water produced in a heat exchanger that serves as a condenser.

Generally, a simultaneous cooling/heating type air conditioner is a kind of multiple air conditioner (see for example patent document EP-A-1394483). The simultaneous cooling/heating type air conditioner simultaneously performs cooling and heating operations to individually cool or heat rooms where indoor units of the air conditioner are installed.

Specifically, the simultaneous cooling/heating air conditioner is configured such that, when one or more rooms are to be heated, the indoor units installed at the corresponding rooms are operated in heating mode, and, at the same time, when one or more rooms are to be cooled, the indoor units installed at the corresponding rooms are operated in cooling mode.

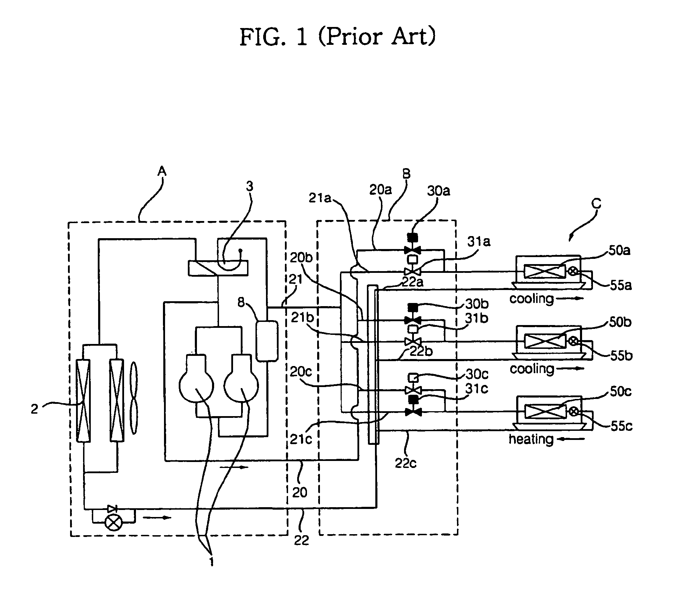

FIG 1 is a circuit diagram of a conventional cooling/heating air conditioner operated in main cooling mode.

As shown in FIG 1, the conventional cooling/heating air conditioner generally comprises an outdoor unit A, a distributor B, and a plurality of indoor units C.

In the outdoor unit A are mounted a compressor 1, an outdoor heat exchanger 2, a 4-way valve 3, and an accumulator 8.

Between the outdoor unit A and the indoor units C are connected high-pressure pipes 20, 20a, 20b, and 20c, through which high-pressure refrigerant flows, low-pressure pipes 21, 21a, 21b, and 21c, through which low-pressure refrigerant flows, and liquid pipes 22, 22a, 22b, and 22c. The high-pressure pipes 20, 20a, 20b, and 20c, the low-pressure pipes 21, 21a, 21b, and 21c, and the liquid pipes 22, 22a, 22b, 22c extend through the distributor B. On the high-pressure pipes 20a, 20b, and 20c are mounted high-pressure valves 30a, 30b, and 30c, respectively. On the low-pressure pipes 21a, 21b, and 21c are mounted low-pressure valves 31a, 31b, and 31c, respectively.

In the indoor units C are mounted indoor heat exchangers 50a, 50b, and 50c and electronic expansion valves 55a, 55b, and 55c.

The conventional simultaneous cooling/heating air conditioner as stated above controls the 4-way valve 3, the high-pressure valves 30a, 30b, and 30c, and the low-pressure valves 31a, 31b, and 31c based on operation mode, such as full cooling mode, main cooling mode, full heating mode, or main heating mode, to simultaneously or individually perform cooling and heating operations.

FIG 1 shows the main cooling operation of the conventional cooling/heating air conditioner. As shown in FIG 1, refrigerant, discharged from the compressor 1, flows to the liquid pipe 22 through the outdoor heat exchanger 2. At the same time, the refrigerant flows to the high-pressure pipe 20. The refrigerant, having passed through the outdoor heat exchanger 2, flows through the electronic expansion valves 55a and 55b and the indoor heat exchangers 50a and 50b to cool the rooms where the corresponding indoor units are installed. Subsequently, the refrigerant flows to the compressor 1 through the low-pressure valves 31a and 31b, the low-pressure pipes 21a, 21b, and 21, and the accumulator 8. On the other hand, the refrigerant, having passed through the high-pressure pipe 20, flows through the high-pressure valve 30c, which is opened, and the indoor heat exchanger 50c to heat the room where the corresponding indoor unit is installed. Subsequently, the refrigerant, having passed through the indoor heat exchanger 50c, joins the refrigerant flowing to the indoor heat exchangers 50a and 50b, and then flows through the indoor heat exchangers 50a and 50b to assist the cooling of the rooms. Thereafter, the refrigerant flows to the compressor 1.

When the conventional cooling/heating air conditioner is operated in the full cooling mode, i.e., when all the indoor units C are operated in the cooling mode, supercooled liquid is supplied from the outdoor heat exchanger 2 to the indoor heat exchangers 50a, 50b, and 50c. Consequently, noise is not generated. When the conventional cooling/heating air conditioner is operated in the main cooling mode, i.e., when at least one of the indoor units C is operated in the heating mode, on the other hand, not only heating-side indoor heat exchanger 50c but also the outdoor heat exchanger 2 serves as a condenser.

However, since the conventional cooling/heating air conditioner as stated above disadvantageously lacks a humidification function, the air conditioner must have a separate humidifier to humidify the room in which the heating-side indoor heat exchanger 50c operates.

In particular, since the cooling-side indoor heat exchangers serve as evaporators, they produce condensed water during cooling operation. The produced condensed water is directly discharged to the outside via a drain hose, and causes a problem of ineffective utilization of the condensed water.

Therefore, the present invention has been made in view of the above problems, and it is an object of the present invention to provide a cooling/heating air conditioner with a humidifying function, which is designed to humidify a region to be heated by use of condensed water that is produced from heat exchangers serving as evaporators, thereby being capable of achieving effective utilization of the condensed water and of simultaneously performing humidifying and heating operations.

In accordance with an aspect of the present invention, the above and other objects can be accomplished by the provision of a cooling/heating air conditioner with a humidifying function comprising: a refrigeration cycle mechanism including a compressor, an outdoor heat exchanger, expansion units, indoor heat exchangers, and a 4-way valve, to enable both cooling and heating operations; a condensed water collecting device to receive and store condensed water, which is produced in part of the outdoor heat exchanger and indoor heat exchangers serving as evaporators; a steam generating device to change the condensed water gathered via the condensed water collecting device into humidifying steam; and a humidifying spray device to supply the steam generated in the steam generating device to rooms.

Preferably, the refrigeration cycle mechanism may have a simultaneous cooling and heating structure, which includes a plurality of indoor heat exchangers to enable cooling and heating operations to be simultaneously carried out.

Preferably, the condensed water collecting device may include: a plurality of condensed water sumps located below the outdoor heat exchanger or indoor heat exchangers to receive the condensed water falling from the respective heat exchangers; a steam tank in which the condensed water received in the respective condensed water sumps is gathered; and condensed water pipes connecting the respective condensed water sumps to the steam tank.

Preferably, a pump may be provided on the condensed water pipes to pump the condensed water gathered in the condensed water sumps into the steam tank.

Preferably, the steam tank may be connected to an external water supply device for supplementing water from an external station.

Preferably, the steam generating device may be constructed to generate steam by separating water particles by use of an ultrasonic vibrator.

Preferably, the humidifying spray device may include: a steam pipe extending from the condensed water collecting device to the rooms to transfer the steam generated by the steam generating device into the rooms; and spray nozzles provided at a distal end of the steam pipe to inject the steam into the respective rooms.

Preferably, opening/closing valves may be provided upstream of the spray nozzles to open or close flow paths.

According to the present invention, steam can be generated by use of condensed water that is produced during cooling/heating operations. By supplying the steam into a desired room in which a heating operation is carried out, consequently, the present invention can realize more pleasant air conditioning environment in such a heated room that may be easily dried, and can achieve effective utilization of the condensed water.

The above and other objects, features and other advantages of the present invention will be more clearly understood from the following detailed description taken in conjunction with the accompanying drawings, in which:
FIG 1 is a circuit diagram illustrating a conventional cooling/heating air conditioner;
FIG 2 is a circuit diagram illustrating a cooling/heating air conditioner with a humidifying function according to the present invention; and
FIG 3 is a perspective view of a heating-side indoor unit according to the present invention, illustrating the discharge of humidifying air.

Now, a preferred embodiment of a cooling/heating air conditioner with a humidifying function according to the present invention will be explained with reference to the accompanying drawings.

It should be noted that components of the cooling/heating air conditioner with a humidifying function according to the present invention, which are identical or similar in construction to those of the conventional cooling/heating air conditioner, are indicated by the same reference numerals as those of the conventional cooling/heating air conditioner, and no detailed description will be given. In the following description, the cooling/heating air conditioner includes three indoor units, although the cooling/heating air conditioner may be a multiple air conditioner including two indoor units or more than three indoor units or a single air conditioner including only one indoor unit.

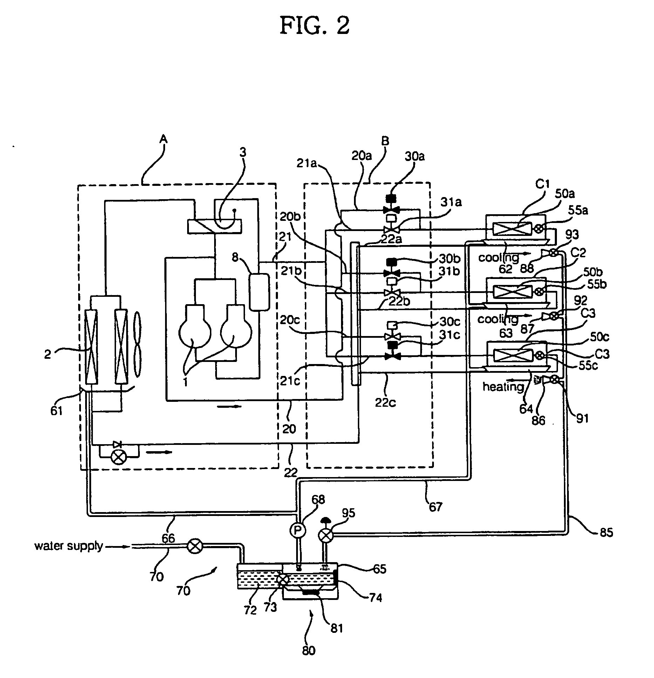

Referring to FIG 2, a cooling/heating air conditioner with a humidifying function according to the present invention is shown in circuit diagram.

As shown in FIG 2, the cooling/heating air conditioner according to the present invention comprises an outdoor unit A, a distributor B, and a plurality of indoor units C. In the outdoor unit A are mounted a compressor 1, an outdoor heat exchanger 2, a 4-way valve 3, and an accumulator 8 are mounted.

Between the outdoor unit A and the indoor units C, C1, C2, and C3 are connected high-pressure pipes 20, 20a, 20b, and 20c, through which high-pressure refrigerant flows, low-pressure pipes 21, 21a, 21b, and 21c, through which low-pressure refrigerant flows, and liquid pipes 22, 22a, 22b, and 22c. The high-pressure pipes 20, 20a, 20b, and 20c, the low-pressure pipes 21, 21a, 21b, and 21c, and the liquid pipes 22, 22a, 22b, 22c extend through the distributor B. On the high-pressure pipes 20a, 20b, and 20c are mounted high-pressure valves 30a, 30b, and 30c, respectively. On the low-pressure pipes 21a, 21b, and 21c are mounted low-pressure valves 31a, 31b, and 31c, respectively.

In the indoor units C are mounted indoor heat exchangers 50a, 50b, and 50c and electronic expansion valves 55a, 55b, and 55c.

The cooling/heating air conditioner as stated above further comprises a condensed water collecting device for providing the air conditioner with a humidifying function. The condensed water collecting device serves to receive and store condensed water, which is produced in ones of the outdoor heat exchanger 2 and the indoor heat exchangers 50a, 50b, and 50c serving as evaporators.

The condensed water collecting device includes: condensed water sumps 61, 62, 63, and 64, which are located below the outdoor heat exchanger 2 or the indoor heat exchangers 50a, 50b, and 50c, respectively, to receive the condensed water falling from the respective heat exchangers; a steam tank 65 into which the condensed water received in the respective condensed water sumps is gathered; and condensed water pipes 66 and 67 connecting the respective condensed water sumps 61, 62, 63, and 64 to the steam tank 65.

Preferably, a pump 68 is provided on the condensed water pipes 66 and 67 for pumping the condensed water, received in the condensed water sumps 61, 62, 63, and 64, into the steam tank 65.

The steam tank 65 is connected to an external water supply device 70 to receive water from an external station when the condensed water of the steam tank 65 is insufficient. The external water supply device 70 includes: a supply hose 71; a water storage tank 72 to receive water via the supply hose 71; an opening/closing valve 73 provided between the water storage tank 72 and the steam tank 65 to adjust the supply of water; and a water level sensor 74 provided in the steam tank 65 to sense the level of water.

The cooling/heating air conditioner of the present invention further comprises a steam generating device 80 for changing the condensed water, which is gathered via the condensed water collecting device as stated above, into humidifying steam.

The steam generating device 80 generates steam by separating water particles by use of an ultrasonic vibrator 81. The steam generating device 80 is a device widely used in general humidifiers, and it is preferred that the steam generating device 80 is mounted to the outdoor unit A or distributor B.

The cooling/heating air conditioner of the present invention further comprises a humidifying spray device to supply the steam generated by the steam generating device 80 into a room. The humidifying spray device includes: a steam pipe 85 extending from the condensed water collecting device to the room for transferring the steam generated by the steam generating device; and spray nozzles 86, 87, and 88 provided at a distal end of the steam pipe 85 to inject the steam into the respective rooms.

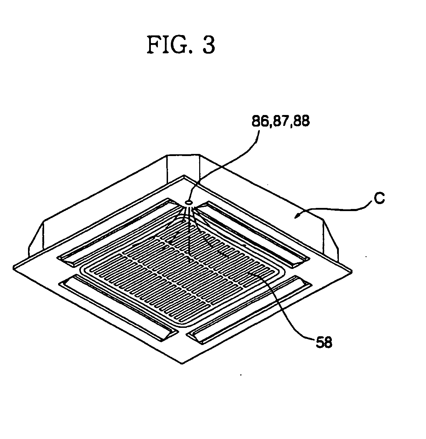

As shown in FIG 3, it is preferred that the spray nozzles 86, 87, and 88 are mounted at a certain location of the respective indoor units C to be partially exposed to the outside, to inject the steam into the corresponding rooms. Alternatively, the spray nozzles may be located on the inside of a discharge opening 58 of the respective indoor units C in accordance with implementation conditions, so that the steam is discharged along with air.

Also, opening/closing valves 91, 92, and 93 are provided upstream of the spray nozzles 86, 87, and 88, respectively, to selectively open or close flow paths, so that the steam is injected to only a room, which is heating and is thus necessary to be humidified.

The steam pipe 85 is provided with a flow rate control valve 95 to adjust the amount of steam to be injected via the spray nozzles 86, 87, and 88.

Hereinafter, the operation of the cooling/heating air conditioner with a humidifying function according to the present invention having the above configuration will be described.

As shown in FIG 2, when the cooling/heating air conditioner is operated in main cooling mode, two indoor units C are operated in cooling mode and the other indoor unit C3 is operated in heating mode.

In this case, the indoor heat exchangers 50a and 50b provided in the two indoor units C1 and C2 serve as evaporators. The condensed water produced in the indoor heat exchangers 50a and 50b falls into the condensed water sumps 62 and 63 and, then, flows through the condensed water pipe 67, to be gathered in the steam tank 65. Admittedly, when the condensed water is unable to naturally flow due to a height difference, the pump 68 is driven, so that the condensed water is stored in the steam tank 65.

After a sufficient amount of the condensed water is gathered in the steam tank 65, the steam generating device 80 using the ultrasonic vibrator 81 is operated to generate steam. Subsequently, the generated steam is supplied into a room, in which the heating-side indoor unit C3 is mounted, by way of the steam pipe 85, thereby acting to humidify the room.

In this case, the opening/closing valves 87 and 88 of rooms to be cooled are closed, so that the steam is not supplied into the rooms.

On the other hand, when the cooling/heating air conditioner is operated in full heating mode, i.e. when all the rooms are to be heated, all the indoor heat exchangers 50a, 50b, and 50c serve as condensers, and the outdoor heat exchanger 2 serves as an evaporator. Accordingly, the steam can be generated, in the same manner as stated above, by use of the condensed water produced by the outdoor heat exchanger 2. Then, the steam is supplied into the rooms in which the heating-side indoor units C1, C2, and C3 are mounted, to humidify the rooms.

Meanwhile, when an insufficient amount of condensed water is supplied into the steam tank 65, water is supplied from an external station to the steam tank 65 by use of the external water supply device 70, to generate steam. Specifically, if the water level sensor 74 provided in the steam tank 65 generates a signal informing that the water level is below a predetermined value, the opening/closing valve 73 is opened, so that the water stored in the water storage tank 72 is supplied into the steam tank 65, to be used for the generation of steam.

As is apparent from the above description, the present invention provides a cooling/heating air conditioner with a humidifying function, which is designed to generate steam by use of condensed water produced during cooling/heating operations and to supply the steam into a desired room in which a heating operation is carried out. Consequently, the present invention has the effect of realizing more pleasant air conditioning environment in a heated room that may be easily dried, and of achieving effective utilization of the condensed water.

## Claims

1. A cooling/heating air conditioner with a humidifying function comprising:
a refrigeration cycle mechanism including a compressor (1), an outdoor heat exchanger (2), expansion units (55a, 55b, and 55c), indoor heat exchangers (50a, 50b, and 50c), and a 4-way valve (3), to enable both cooling and heating operations;
a condensed water collecting device to receive and store condensed water, which is produced in part of the outdoor heat exchanger (2) and indoor heat exchangers (50a, 50b, and 50c) serving as evaporators;
a steam generating device (80) to change the condensed water gathered via the condensed water collecting device into humidifying steam; and
a humidifying spray device (80) to supply the steam generated in the steam generating device to rooms.

2. The air conditioner as set forth in claim 1, wherein the refrigeration cycle mechanism has a simultaneous cooling and heating structure, which includes a plurality of indoor heat exchangers (50a, 50b, and 50c) to enable cooling and heating operations to be simultaneously carried out.

3. The air conditioner as set forth in claim 1 or 2, wherein the condensed water collecting device includes:
a plurality of condensed water sumps (61, 62, 63, and 64) located below the outdoor heat exchanger (2) or indoor heat exchangers (50a, 50b, and 50c) to receive the condensed water falling from the respective heat exchangers;
a steam tank (65) in which the condensed water received in the respective condensed water sumps (61, 62, 63, and 64) is gathered; and
condensed water pipes (66 and 67) connecting the respective condensed water sumps (61, 62, 63, and 64) to the steam tank (65).

4. The air conditioner as set forth in claim 3, wherein a pump (68) is provided on the condensed water pipes (66 and 67) to pump the condensed water gathered in the condensed water sumps (61, 62, 63, and 64) into the steam tank (65).

5. The air conditioner as set forth in claim 3 or 4, wherein the steam tank (65) is connected to an external water supply device (70) for supplementing water from an external station.

6. The air conditioner as set forth in any of claims 1 to 5, wherein the steam generating device (80) is constructed to generate steam by separating water particles by use of an ultrasonic vibrator (81).

7. The air conditioner as set forth in any of claims 1 to 6, wherein the humidifying spray device includes:
a steam pipe (85) extending from the condensed water collecting device to the rooms to transfer the steam generated by the steam generating device (80) into the rooms; and
spray nozzles (86, 87, and 88) provided at a distal end of the steam pipe (85) to inject the steam into the respective rooms.

8. The air conditioner as set forth in claim 7, wherein opening/closing valves (91, 92, and 93).are provided upstream of the spray nozzles (86, 87, and 88), to open or close flow paths.

9. A method for operating an air conditioner according to any of claims 1 to 8.

## Patentansprüche

1. Kühlende/heizende Klimaanlage mit einer Befeuchtungsfunktion, die aufweist:
einen Kältekreislaufmechanismus, der einen Kompressor (1), einen Außenwärmetauscher (2), Expansionseinheiten (55a, 55b und 55c), Innenwärmetauscher (50a, 50b und 50c) und ein 4-Wegeventil (3) aufweist, um sowohl einen Kühl- als auch Heizbetrieb zu ermöglichen;
eine Kondenswassersammelvorrichtung, um Kondenswasser aufzunehmen und zu speichern, das teilweise vom Außenwärmetauscher (2) und den Innenwärmetauschern (50a, 50b und 50c) erzeugt wird, die als Verdampfer dienen;
eine Dampferzeugungsvorrichtung (80), um das über die Kondenswassersammelvorrichtung gesammelte Kondenswasser in Befeuchtungsdampf umzuwandeln; und
eine Befeuchtungssprühvorrichtung (80), um den in der Dampferzeugungsvorrichtung erzeugten Dampf Räumen zuzuführen.

2. Klimaanlage nach Anspruch 1, wobei der Kältekreislaufmechanismus eine gleichzeitige Kühl- und Heizstruktur aufweist, die mehrere Innenwärmetauscher (50a, 50b und· 50c) aufweist, um es zu ermöglichen, daß gleichzeitig ein Kühl- und Heizbetrieb ausgeführt wird.

3. Klimaanlage nach Anspruch 1 oder 2, wobei die Kondenswassersammelvorrichtung aufweist:
mehrere Kondenswassersammelbehälter (61, 62, 63 und 64), die unter dem Außenwärmetauscher (2) oder Innenwärmetauschern (50a, 50b und 50c) angeordnet sind, um das Kondenswasser aufzunehmen, das von den jeweiligen Wärmetauschern fällt;
einen Dampftank (65), in dem das Kondenswasser, das in den jeweiligen Kondenswassersammelbehältern (61, 62, 63 und 64) aufgenommen wird, gesammelt wird; und
Kondenswasserrohre (66 und 67), die die jeweiligen Kondenswassersammelbehälter (61, 62, 63 und 64) mit dem Dampftank (65) verbinden.

4. Klimaanlage nach Anspruch 3, wobei eine Pumpe (68) an den Kondenswasserrohren (66 und 67) vorgesehen ist, um das in den Kondenswassersammelbehältern (61, 62, 63 und 64) gesammelte Kondenswasser in den Dampftank (65) zu pumpen.

5. Klimaanlage nach Anspruch 3 oder 4, wobei der Dampftank (65) zur Ergänzung von Wasser aus einer externen Station mit einer externen Wasserversorgungsvorrichtung (70) verbunden ist.

6. Klimaanlage nach einem der Ansprüche 1 bis 5, wobei die Dampferzeugungsvorrichtung (80) so aufgebaut ist, daß sie Dampf durch Abtrennen von Wasserteilchen durch die Verwendung eines Ultraschallschwingungserzeugers (81) erzeugt.

7. Klimaanlage nach einem der Ansprüche 1 bis 6, wobei die Befeuchtungssprühvorrichtung aufweist:
ein Dampfrohr (85), das sich von der Kondenswassersammelvorrichtung zu den Räumen erstreckt, um den durch die Dampferzeugungsvorrichtung (80) erzeugten Dampf in die Räume zu überführen; und
Sprühdüsen (86, 87 und 88), die an einem Distalende des Dampfrohrs (85) vorgesehen sind, um den Dampf in die jeweiligen Räume einzuspritzen.

8. Klimaanlage nach Anspruch 7, wobei stromaufwärts von den Sprühdüsen (86, 87 und 88) Öffnungs-/Schließventile (91, 92 und 93) vorgesehen sind, um Durchflußwege zu öffnen oder zu schließen.

9. Verfahren zum Betreiben einer Klimaanlage nach einem der Ansprüche 1 bis 8.

## Revendications

1. Système de climatisation refroidissant/chauffant avec une fonction d'humidification comprenant :
un mécanisme de cycle de réfrigération comprenant un compresseur (1), un échangeur thermique extérieur (2), des unités d'expansion (55a, 55b et 55c), des échangeurs thermiques intérieurs (50a, 50b et 50c) et une vanne 4 voies (3) afin de permettre les opérations à la fois de refroidissement et de chauffage ;
un dispositif de collecte d'eau condensée afin de recevoir et de stocker l'eau condensée qui est produite dans une partie de l'échangeur thermique extérieur (2) et des échangeurs thermiques intérieurs (50a, 50b et 50c) servant d'évaporateurs ;
un dispositif de génération de vapeur (80) pour transformer en vapeur d'humidification l'eau condensée recueillie via le dispositif de collecte d'eau condensée ; et
un dispositif d'humidification par vaporisation (80) pour conduire dans des pièces la vapeur générée dans le dispositif de génération de vapeur.

2. Système de climatisation selon la revendication 1, dans lequel le mécanisme de cycle de réfrigération possède une structure de refroidissement et de chauffage simultanés qui comprend une pluralité d'échangeurs thermiques intérieurs (50a, 50b et 50c) afin de permettre aux opérations de refroidissement et de chauffage d'être effectuées simultanément.

3. Système de climatisation selon la revendication 1 ou 2, dans lequel le dispositif de collecte d'eau condensée comprend :
une pluralité de collecteurs d'eau condensée (61, 62, 63 et 64) situés en dessous de l'échangeur thermique extérieur (2) ou des échangeurs thermiques intérieurs (50a, 50b et 50c) afin de recevoir l'eau condensée tombant des échangeurs thermiques respectifs ;
un réservoir à vapeur (65) dans lequel est recueillie l'eau condensée réceptionnée dans les collecteurs d'eau condensée respectifs (61, 62, 63 et 64) ; et
des conduites d'eau condensée (66 et 67) reliant les collecteurs d'eau condensée respectifs (61, 62, 63 et 64) au réservoir à vapeur (65).

4. Système de climatisation selon la revendication 3, dans lequel une pompe (68) est prévue sur les conduites d'eau condensée (66 et 67) afin de pomper l'eau condensée recueillie dans les collecteurs d'eau condensée (61, 62, 63 et 64) dans le réservoir à vapeur (65).

5. Système de climatisation selon la revendication 3 ou 4, dans lequel le réservoir à vapeur (65) est relié à un dispositif d'alimentation en eau externe (70) afin d'ajouter de l'eau en provenance d'une station externe.

6. Système de climatisation selon l'une quelconque des revendications 1 à 5, dans lequel le dispositif de génération de vapeur (80) est construit pour générer de la vapeur en séparant les particules d'eau à l'aide d'un vibreur à ultrasons (81).

7. Système de climatisation selon l'une quelconque des revendications 1 à 6, dans lequel le dispositif d'humidification par vaporisation comprend :
une conduite de vapeur (85) s'étendant du dispositif de collecte d'eau condensée aux pièces afin de transférer la vapeur générée par le dispositif de génération de vapeur (80) dans les pièces ; et
des gicleurs (86, 87 et 88) prévus à une extrémité distale de la conduite de vapeur (85) afin d'injecter la vapeur dans les pièces respectives.

8. Système de climatisation selon la revendication 7, dans lequel des vannes d'ouverture/fermeture (91, 92 et 93) sont prévues en amont des gicleurs (86, 87 et 88) afin d'ouvrir ou de fermer des voies de passage.

9. Procédé pour faire fonctionner un système de climatisation selon l'une quelconque des revendications 1 à 8.
